# FASCICULE DE BREVET EUROPEEN

(11) **EP 4 451 700 B1**
(45) Date de publication et mention de la délivrance du brevet: **21.05.2025**
(21) Numéro de dépôt: 24169990.9
(22) Date de dépôt: 12.04.2024
(51) Int. Cl.: H04R 5/02, H04R 1/02, H04N 21/40, H04R 1/26, H04N 21/41, H04N 5/64, H04R 1/28, H04R 3/14

(54) **BOITIER DECODEUR DE HAUTEUR REDUITE**
DEKODERGEHÄUSE MIT REDUZIERTER HÖHE
REDUCED HEIGHT SET TOP BOX

(30) Priorité: 17.04.2023 FR 2303802
(43) Date de publication de la demande: 23.10.2024
(73) Titulaire: Sagemcom Broadband SAS, 92270 Bois-Colombes (FR)
(72) Inventeur: CHUSSEAU, Hugo, 92270 BOIS-COLOMBES (FR); NEDELCU, Radu, 92270 BOIS-COLOMBES (FR); DELPLACE, Stéphane, 92270 BOIS-COLOMBES (FR); BOURGOIN, Gilles, 92270 BOIS-COLOMBES (FR)
(74) Mandataire: Cabinet Boettcher

(56) Documents cités:
- FR-A1- 3 110 797
- FR-A1- 3 110 799
- FR-A1- 3 139 405
- US-A1- 2014 177 883
- US-A1- 2016 127 831
- US-A1- 2022 124 434

## Description

L'invention concerne le domaine des boîtiers décodeurs et, en particulier, des boîtiers décodeurs intégrant une enceinte acoustique.

### ARRIERE PLAN DE L'INVENTION

Un boîtier décodeur (ou STB, pour *Set-Top Box*) est, très classiquement, destiné à être relié à un téléviseur via un câble HDMI (pour *High Definition Multimedia Interface*).

Le boîtier décodeur acquiert un flux entrant, qui est par exemple un flux audiovisuel. Le flux entrant peut être un flux entrant externe provenant d'une source externe : réseau local, satellite, câble, DVB-T (pour *Digital Video Broadcasting-Terrestrial*), xDSL (pour *Digital Subscriber Line*), etc. Le flux entrant peut aussi être un flux entrant interne provenant d'une source interne au boîtier décodeur, par exemple d'un disque dur de type HDD (pour *Hard Disk Drive).*

Le boîtier décodeur extrait du flux audiovisuel un flux audio et un flux vidéo, et transmet le flux vidéo et le flux audio au téléviseur. Le téléviseur restitue via son écran le flux vidéo, et restitue via ses haut-parleurs le flux audio.

Le flux audio peut aussi être transmis à des équipements externes : barre de son, enceinte connectée, etc.

On envisage d'équiper un boîtier décodeur d'une enceinte acoustique comprenant un caisson acoustique et des haut-parleurs intégrés dans le caisson acoustique. Le boîtier décodeur est ainsi capable de restituer le flux audio et de mettre en œuvre des effets de spatialisation sonore.

Le boîtier décodeur est généralement positionné à proximité du téléviseur, par exemple à côté de celui-ci ou bien dans un meuble sur lequel est posé le téléviseur. La position précise du boîtier décodeur par rapport à l'utilisateur n'est donc pas connue a priori.

Par ailleurs, l'encombrement du boîtier décodeur doit être limité pour que celui-ci puisse être installé sans difficulté par l'utilisateur.

Le positionnement aléatoire du boîtier décodeur par rapport à l'utilisateur, ainsi que la limitation de son volume, limitent clairement les performances acoustiques du boîtier décodeur ainsi que le bon rendu des effets de spatialisation du son.

Les documents FR3139405 A1, FR3110797 A1 et FR3110799 décrivent des boîtiers décodeurs comportant une enceinte acoustique comprenant plusieurs haut-parleurs.

### OBJET DE L'INVENTION

L'invention a pour objet d'améliorer la restitution sonore d'une enceinte acoustique d'un boîtier décodeur, et d'améliorer la spatialisation sonore mise en œuvre via l'enceinte acoustique.

### RESUME DE L'INVENTION

En vue de la réalisation de ce but, on propose un boîtier décodeur selon la revendication 1.

Le positionnement de la carte électronique principale et du deuxième haut-parleur permet de réduire la hauteur du boîtier décodeur. Le boîtier décodeur peut ainsi être positionné devant le téléviseur et donc en face de l'utilisateur.

Cet arrangement permet d'avoir des premiers haut-parleurs ayant des dimensions relativement élevées, qui améliorent leur capacité de reproduction des basses fréquences. Il est donc possible d'augmenter la gamme de fréquence sur laquelle s'appliquent les effets de spatialisation, sans pour autant risquer de dégrader la restitution audio lors du mixage des composantes basses fréquences des canaux spatialisés.

Il est aussi possible d'avoir un espacement important entre les premiers haut-parleurs.

Ces caractéristiques permettent d'améliorer très nettement les effets de spatialisation sonore.

De plus, l'espacement important entre les premiers haut-parleurs permet de conserver un volume interne important du caisson acoustique, malgré sa hauteur réduite, ce qui, à nouveau, améliore les performances acoustiques de l'enceinte acoustique.

On propose de plus un boîtier décodeur tel que précédemment décrit, dans lequel les deux premiers haut-parleurs sont orientés chacun vers l'extérieur du caisson acoustique, de sorte que pour chaque premier haut-parleur, un angle entre un axe central d'une membrane dudit premier haut-parleur et l'axe avant-arrière du caisson acoustique est compris entre 30° et 50°, un rapport entre une distance entre des centres des membranes des premiers haut-parleurs, et une hauteur du caisson acoustique, étant supérieur à 5, et un rapport entre un diamètre de la membrane de chaque premier haut-parleur et la hauteur du caisson acoustique étant supérieur à 0,4.

On propose de plus un boîtier décodeur tel que précédemment décrit, dans lequel :
- pour chaque premier haut-parleur, l'angle entre l'axe central de la membrane dudit premier haut-parleur et l'axe avant-arrière du caisson acoustique est compris dans l'intervalle [38° ; 42°] ;
- la distance entre les centres des membranes des premiers haut-parleurs est comprise dans l'intervalle [320 mm ; 380 mm] ;
- la hauteur du caisson acoustique est comprise dans l'intervalle [50 mm ; 60 mm] ;
- le diamètre de la membrane de chaque premier haut-parleur est compris dans l'intervalle [24 mm ; 30 mm].

On propose de plus un boîtier décodeur tel que précédemment décrit, le caisson acoustique comprenant une pièce supérieure et une pièce inférieure définies selon la hauteur du caisson acoustique.

On propose de plus un boîtier décodeur tel que précédemment décrit, la membrane du deuxième haut-parleur étant fixée à une face inférieure de la pièce inférieure du caisson acoustique et débouchant dans une ouverture formée dans ladite face inférieure.

On propose de plus un boîtier décodeur tel que précédemment décrit, dans lequel la pièce inférieure du caisson acoustique comprend une portion latérale inclinée, qui s'étend depuis ladite ouverture, de sorte qu'une largeur de la face inférieure de la pièce inférieure du caisson acoustique est inférieure, au niveau de la portion latérale inclinée, à une largeur d'un bord supérieur de la pièce inférieure qui est opposé à ladite face inférieure, la portion latérale inclinée permettant de faciliter un écoulement d'air mis en mouvement par la membrane du deuxième haut-parleur.

On propose de plus un boîtier décodeur tel que précédemment décrit, dans lequel une paroi interne d'une face supérieure de la pièce supérieure comprend des premières nervures formant un premier motif, et dans laquelle une paroi interne de la face inférieure de la pièce inférieure comprend des deuxièmes nervures formant un deuxième motif, qui est différent du premier motif.

On propose de plus un boîtier décodeur tel que précédemment décrit, dans lequel, lorsque le caisson acoustique est assemblé, une distance minimale entre un sommet des premières nervures et un sommet des deuxièmes nervures est comprise entre 3 mm et 5 mm.

On propose de plus un boîtier décodeur tel que précédemment décrit, dans lequel l'un des bord inférieur de la pièce supérieure ou bord supérieur de la pièce inférieure comprend une nervure s'étendant sur un pourtour dudit bord, et l'autre des bord inférieur de la pièce supérieure ou bord supérieur de la pièce inférieure comprend une gorge s'étendant sur un pourtour dudit bord, un joint d'étanchéité étant positionné dans la gorge et étant comprimé par la nervure lorsque le caisson acoustique est assemblé.

On propose de plus un boîtier décodeur tel que précédemment décrit, dans lequel la carte électronique principale est positionnée, à l'extérieur du caisson acoustique, dans une cavité d'accueil définie dans un renfoncement formé dans une paroi externe d'une face inférieure de la pièce inférieure du caisson acoustique.

On propose de plus un boîtier décodeur tel que précédemment décrit, comprenant en outre un capot inférieur qui comprend une face inférieure et une face latérale arrière, la face inférieure comportant des premiers trous en regard de la membrane du deuxième haut-parleur, la face latérale arrière comportant des deuxième trous en regard de la portion latérale inclinée.

On propose de plus un boîtier décodeur tel que précédemment décrit, dans lequel les premiers trous et les deuxièmes trous forment une structure en nid d'abeille.

On propose de plus un boîtier décodeur tel que précédemment décrit, comprenant une paroi verticale, qui est formée dans une paroi externe de la face inférieure de la pièce inférieure du caisson acoustique, qui s'étend selon une largeur de la pièce inférieure, et qui sépare ainsi physiquement la membrane du deuxième haut-parleur de la carte électronique principale.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 est une vue éclatée et en perspective du boîtier décodeur ;
[Fig. 2] la figure 2 est une vue de dessus de l'enceinte acoustique ;
[Fig. 3] la figure 3 est un graphique comprenant des courbes de niveau de restitution de haut-parleurs en fonction de la fréquence ;
[Fig. 4] la figure 4 est une vue en perspective d'un premier haut-parleur ;
[Fig. 5] la figure 5 représentes deux vues de face du boîtier décodeur, dans lesquelles seuls certains composants sont représentés ;
[Fig. 6] la figure 6 est une vue de dessous et en perspective de l'enceinte acoustique ;
[Fig. 7] la figure 7 est un graphique comprenant des courbes de réponse en fréquence d'un haut-parleur en fonction du volume acoustique de l'enceinte ;
[Fig. 8] la figure 8 représente une vue partielle du capot inférieur, de dessous et en perspective, ainsi qu'un agrandissement de la structure en nid d'abeille ;
[Fig. 9] la figure 9 représente une vue de la paroi interne de la face inférieure de la pièce inférieure du caisson, et une vue de la paroi interne de la face supérieure de la pièce supérieure du caisson ;
[Fig. 10] la figure 10 est une vue en coupe d'une gorge et d'une nervure formées sur les bords des pièces supérieure et inférieure du caisson.

### DESCRIPTION DETAILLEE DE L'INVENTION

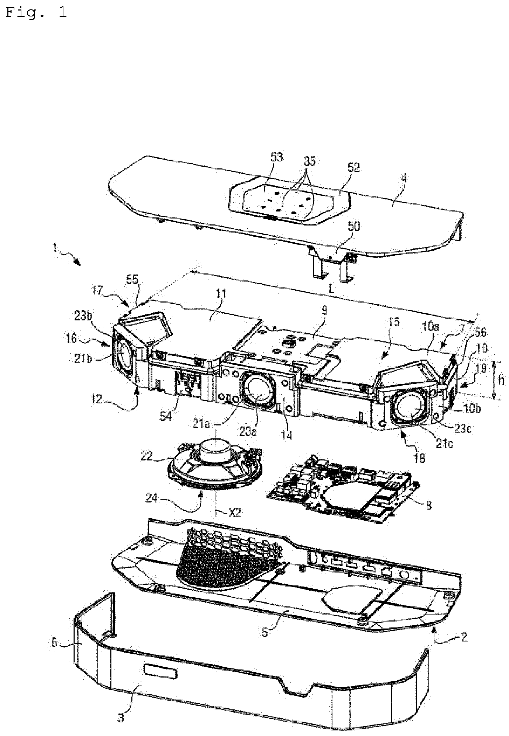

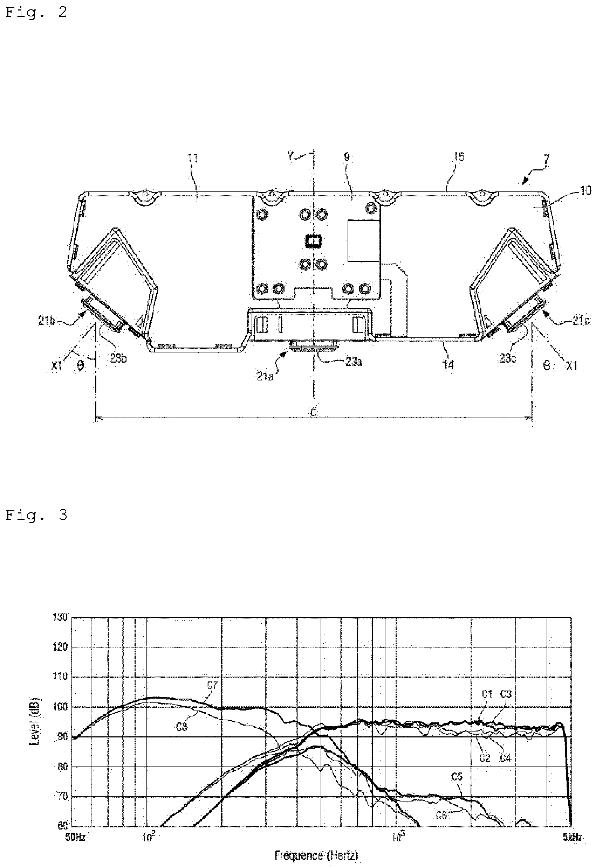

En référence aux figures 1 et 2, le boîtier décodeur 1 est conçu pour mettre en œuvre les fonctions « classiques » d'un boîtier décodeur, qui comprennent notamment l'extraction, le décodage et le traitement des composantes d'un flux d'entrée audio-vidéo, et la transmission desdites composantes à un téléviseur et éventuellement à d'autres équipements (des enceintes par exemple).

Le boîtier décodeur 1 est aussi conçu pour mettre en forme et restituer des signaux audio, et pour mettre en œuvre des effets de spatialisation sonore. Le boîtier décodeur 1 peut aussi mettre en œuvre un procédé d'assistance vocale.

Le boîtier décodeur 1 est destiné à être posé sur un support, de sorte que sa face inférieure 2 repose sur ledit support.

La position nominale de fonctionnement du boîtier décodeur 1, permettant d'optimiser la restitution sonore, est une position dans laquelle le boîtier décodeur 1 se trouve devant le téléviseur, de sorte que sa face avant 3 soit positionnée en face de l'utilisateur lorsque celui est installé pour regarder un programme sur le téléviseur.

Ici, tous les termes de position, tels que avant, arrière, supérieur, inférieur, gauche, droite, etc., s'interprètent en considérant que le boîtier décodeur 1 se trouve dans sa position nominale de fonctionnement, et est vu de face (comme s'il était vu par l'utilisateur).

Le boîtier décodeur 1 comprend un capot supérieur 4, un capot inférieur 5, un support latéral 6, une enceinte acoustique 7, une carte électronique principale 8 et une carte électronique secondaire 9 comprenant des microphones.

La carte électronique principale 8 comprend notamment un module de décodage, qui met en œuvre la fonction de décodage, un module de communication, agencé notamment pour transmettre des flux audio et vidéo aux équipements auxquels le boîtier décodeur 1 est connecté, un module audio, et un module d'alimentation, qui fournit des tensions et courants d'alimentation à ces modules. Le module audio est relié aux haut-parleurs de l'enceinte acoustique 7 du boîtier décodeur 1 et comprend notamment des amplificateurs.

Comme on le verra plus bas, la carte électronique principale 8 est montée parallèlement et à proximité du capot inférieur 5, et la carte électronique secondaire 9 est montée parallèlement et à proximité du capot supérieur 4 du boîtier décodeur 1.

Un tissu (non représenté) recouvre le support latéral 6 en étant fixé à celui-ci.

L'enceinte acoustique 7 comprend un caisson acoustique 10 et des haut-parleurs intégrés dans le caisson acoustique.

Le caisson acoustique 10 comprend deux pièces : une pièce supérieure 10a et une pièce inférieure 10b, qui sont définies dans la hauteur du caisson acoustique 10. Ces deux pièces sont assemblées entre elles lors de la fabrication de l'enceinte acoustique 7.

Le caisson acoustique 10 comprend une face supérieure 11 (qui est la face supérieure de la pièce supérieure 10a), une face inférieure 12 (qui est la face inférieure de la pièce inférieure 10b), une face avant 14, une face arrière 15, et des faces latérales. Les faces latérales comprennent une face latérale avant gauche 16, une face latérale arrière gauche 17, une face latérale avant droite 18, et une face latérale arrière droite 19.

Les haut-parleurs comprennent des premiers haut-parleurs 21, ici trois premiers haut-parleurs 21a, 21b, 21c, et un deuxième haut-parleur 22.

Chaque premier haut-parleur 21 est un haut-parleur « *midrange* », appelé aussi medium ou médial. La conception des premiers haut-parleurs 21 est donc optimisée pour la restitution des moyennes fréquences et des hautes fréquences (fréquences comprises par exemple entre 500 Hz et 5 kHz).

Le deuxième haut-parleur 22 est un haut-parleur de graves, appelé aussi « *boomer* » ou « *woofer* ». La conception du deuxième haut-parleur 22 est donc optimisée pour la restitution des basses fréquences (fréquences comprises par exemple entre 50 Hz et 500 Hz).

Le premier haut-parleur 21a est fixé à une portion centrale de la face avant 14 du caisson 10. Sa membrane 23a débouche dans une ouverture pratiquée dans ladite face avant 14.

Le premier haut-parleur 21b est fixé à la face latérale avant gauche 16 du caisson 10. Sa membrane 23b débouche dans une ouverture pratiquée dans ladite face latérale avant gauche 16.

Le premier haut-parleur 21c est fixé à la face latérale avant droite 18 du caisson 10. Sa membrane 23c débouche dans une ouverture pratiquée dans ladite face latérale avant droite 18.

Le deuxième haut-parleur 22 est fixé à la face inférieure 12 du caisson 10. Sa membrane 24 débouche dans une ouverture pratiquée dans ladite face inférieure 12.

Les deux premiers haut-parleurs 21b et 21c sont donc positionnés à l'avant et de chaque côté du caisson 10, et sont orientés chacun vers l'extérieur du caisson 10, de sorte que pour chaque premier haut-parleur 21b, 21c, un angle θ entre un axe central X1 d'une membrane dudit premier haut-parleur et un axe avant-arrière Y du caisson 10 est compris entre 30° et 50°.

Ici, pour chaque premier haut-parleur 21b, 21c, l'angle θ entre l'axe central X1 de la membrane dudit premier haut-parleur et l'axe avant-arrière Y du caisson 10 est de préférence compris dans l'intervalle [38° ; 42°], et est avantageusement égal à 40°.

On note qu'ici, les membranes des haut-parleurs 21, 22 sont des pièces de révolution qui s'étendent chacune autour d'un axe de révolution. L'axe central de chaque membrane est son axe de révolution.

Cependant, les membranes ne sont pas forcément des pièces de révolution et peuvent avoir par exemple, lorsqu'elles sont vues en coupe selon un plan P, une forme d'ellipse ou une forme de rectangle arrondi. Dans ce cas, l'axe central est l'axe qui passe par le centre de ladite forme en étant perpendiculaire audit plan P.

Par « axe avant-arrière », on entend ici un axe perpendiculaire à la face avant 14 et à la face arrière 15 du caisson 10 et passant par le centre de ces faces.

L'axe avant-arrière Y du caisson 10 est aussi celui du boîtier décodeur 1.

L'axe central X1 de la membrane 23a du premier haut-parleur 21a est parallèle à l'axe avant-arrière Y (ici confondu).

Les axes centraux des membranes des premiers haut-parleurs 21 sont des axes horizontaux. L'axe central X2 de la membrane 24 du deuxième haut-parleur 22 est un axe vertical.

La longueur L du caisson 10 est nettement supérieure à sa hauteur h. Le rapport entre la distance d entre les centres des membranes 23b, 23c des premiers haut-parleurs 21b, 21c, et la hauteur h du caisson 10, est supérieur à 5 (par supérieur, on entend supérieur ou égal).

Par « centre d'une membrane », on entend le centre de la membrane au niveau de sa plus grande circonférence.

Ici, la distance d entre les centres des membranes 23b, 23c des premiers haut-parleurs 21b, 21c est comprise dans l'intervalle [320 mm ; 380 mm], et est avantageusement égale à 350 mm.

La longueur totale L du caisson acoustique 10 est comprise dans l'intervalle [350 mm ; 410 mm], et est avantageusement égale à 380 mm.

La hauteur h du caisson acoustique 10 est comprise dans l'intervalle [50 mm ; 60 mm], et est avantageusement égale à 55 mm.

La hauteur h' du boîtier décodeur 1 est comprise dans l'intervalle [55 mm ; 65 mm], et est avantageusement égale à 60 mm.

La faible hauteur du caisson 10, et donc du boîtier décodeur 1, s'avère avantageuse pour la raison suivante.

Il a été constaté qu'une très grande majorité des téléviseurs sont conçus de sorte que, lorsqu'un boîtier décodeur 1 de cette hauteur est positionné devant le téléviseur, le boîtier décodeur 1 ne masque du tout l'image restituée. Le boîtier décodeur 1 peut donc être positionné devant le téléviseur et donc en face de l'utilisateur, ce qui permet d'optimiser le rendu des effets de spatialisation du son.

La distance relativement importante entre les premiers haut-parleurs 21b, 21c est elle aussi très avantageuse.

La spatialisation sonore est la capacité d'un système audio à produire un champ sonore tridimensionnel qui donne l'impression que les sons proviennent de différentes positions dans l'espace. Lorsque les haut-parleurs sont écartés à une distance spécifique, cela permet de reproduire un champ sonore plus réaliste et précis, tandis qu'un écartement inadapté peut altérer cette spatialisation.

Lorsque l'on écoute de la musique ou tout autre contenu audio, notre cerveau utilise les différences de temps d'arrivée et d'intensité sonore entre nos deux oreilles pour localiser les sources sonores dans l'espace. Si les haut-parleurs sont trop proches, ces différences sont insuffisantes et notre cerveau ne peut pas traiter correctement l'information spatiale, ce qui entraîne une perte de précision et de réalisme.

Inversement, si les haut-parleurs sont trop éloignés, la spatialisation peut sembler artificielle ou confuse, car le son mettra plus de temps à arriver à l'auditeur depuis chaque haut-parleur, ce qui peut affecter la perception de la direction des sources sonores. En outre, un écartement inapproprié peut également causer des interférences entre les signaux émis par les haut-parleurs, produisant des effets de distorsion et de coloration indésirables.

Ainsi, l'écartement des haut-parleurs a un impact sur la qualité de la spatialisation sonore, car il peut altérer la précision, le réalisme et la clarté du champ sonore tridimensionnel, ainsi que la perception des sources sonores dans l'espace. Pour obtenir une spatialisation optimale, il est donc important de choisir un écartement adapté à la pièce d'écoute et à la configuration des haut-parleurs : un exemple de configuration optimale peut être des haut-parleurs latéraux espacés de moins de deux fois l'écartement moyen de nos oreilles, et placés à plus de deux mètres des murs latéraux de la pièce.

Les dimensions du caisson acoustique 10 et l'espacement entre les premiers haut-parleurs 21b, 21c sont donc définis pour optimiser le rendu sonore.

L'orientation des premiers haut-parleurs 21b, 21c, par rapport à l'axe avant-arrière Y du caisson 10, est très avantageuse par rapport à une orientation plus classique de 90°.

Si les haut-parleurs sont positionnés de manière à projeter le son directement vers les oreilles de l'auditeur, cela peut améliorer la spatialisation au point de concentration central, car le son arrive directement à l'endroit où il est censé être entendu. Par contre, lorsque l'auditeur s'écarte de cette zone idéale d'écoute, la spatialisation est nettement dégradée, rendant la source sonore multi haut-parleurs équivalente à une source ponctuelle monophonique.

L'angle de projection est l'angle entre l'axe du haut-parleur et l'endroit où le son est dirigé. Il s'agit d'un facteur important qui peut affecter la qualité de la spatialisation sonore. En effet, la perception de la position des sources sonores dans l'espace dépend de la façon dont le son est projeté dans la pièce d'écoute, ainsi que de l'emplacement des haut-parleurs. Si les haut-parleurs sont orientés de manière à projeter le son vers les murs ou les plafonds ayant des caractéristiques réverbérantes (coefficient d'absorption α moyen < 0,5), cela produira des réflexions et des échos. Les algorithmes de spatialisation courants (notamment ceux de Dolby ou DTS, ou d'autres entreprises de développement *software* audio) utilisent ces effets pour élargir la scène sonore.

Par ailleurs, si les haut-parleurs sont placés trop près de l'auditeur et orientés directement vers lui, la scène sonore peut sembler étroite et confinée. En revanche, si les haut-parleurs sont placés plus loin et orientés de manière à créer un angle plus large, la scène sonore peut sembler plus spacieuse et immersive.

L'angle de projection du son est donc un élément clé qui a un impact significatif sur la qualité de la spatialisation sonore. L'orientation choisie, de 40° par rapport à l'axe avant-arrière Y, est appropriée et optimale pour obtenir une spatialisation précise et réaliste, ainsi qu'une scène sonore large et immersive.

Dans le caisson 10, le deuxième haut-parleur 22 est dédié à la restitution des composantes basse-fréquences de l'audio. Le deuxième haut-parleur 22 est relié à une sortie audio dédiée du module audio mis en œuvre sur la carte électronique principale 8.

Le signal audio basse fréquence sur cette sortie audio dédiée est défini de la manière suivante.

Dans le cas où le module audio reçoit en entrée un signal d'entrée stéréo, ce signal audio basse fréquence est défini par la résultante de l'extraction des basses fréquences des autres canaux jusqu'à une fréquence définie par les capacités acoustiques des haut-parleurs. Cette fréquence est appelée : fréquence d'extraction des composantes basses fréquences.

Dans le cas d'un signal d'entrée multicanal comprenant un canal LFE (pour *Low Frequency Effects* ; il s'agit d'un signal de fréquences inférieures typiquement à 120 Hz), le signal audio basse fréquence est défini par le mixage du canal LFE et de la résultante de l'extraction des basses fréquences des autres canaux jusqu'à une fréquence définie par les capacités acoustiques des haut-parleurs. Cette fréquence est appelée : fréquence maximale d'extraction des composantes basses fréquences.

Les procédés de spatialisation du son nécessitent d'appliquer des délais et des déphasages aux différents canaux audio (essentiellement Gauche et Droite) dans notre cas. Or, le fait de mixer ensemble les composantes basses fréquences de canaux spatialisés vers une sortie audio dédiée (reliée au deuxième haut-parleur 22) dégradera sensiblement la restitution audio. Ainsi, dans la pire hypothèse de canaux Gauche et Droite en opposition de phase, le signal résultant serait nul.

Il est donc nécessaire de spatialiser les canaux à partir d'une fréquence supérieure à la fréquence d'extraction des composantes basses fréquences.

Néanmoins, afin de bénéficier de la meilleure spatialisation possible, il est nécessaire de permettre aux effets de spatialisation de s'appliquer sur une gamme de fréquence la plus large possible et donc d'utiliser une fréquence d'extraction des basses la plus basse possible.

La valeur de cette fréquence d'extraction des composantes basses fréquences est déterminée par les caractéristiques des haut-parleurs associés à chacun des canaux. Une étude approfondie de ceux-ci est nécessaire.

On voit sur la figure 3 la courbe C1 représentant, en fonction de la fréquence, le niveau de restitution d'un haut-parleur de gauche (*midrange*) de taille réduite. La courbe C2 est une courbe équivalente pour un haut-parleur de gauche de taille plus importante. La courbe C3 est une courbe équivalente pour un haut-parleur de droite (*midrange*) de taille réduite. La courbe C4 est une courbe équivalente pour un haut-parleur de droite de taille plus importante. La courbe C5 est une courbe équivalente pour un haut-parleur central de taille réduite. La courbe C6 est une courbe équivalente pour un haut-parleur central (*midrange*) de taille plus importante. La courbe C7 est une courbe équivalente pour un haut-parleur basse fréquence de taille réduite. La courbe C8 est une courbe équivalente pour un haut-parleur basse fréquence de taille plus importante.

Dans cet exemple, la configuration avec haut-parleurs de taille réduite (courbes en traits épais) induit une fréquence d'extraction des composantes basses fréquences de 475 Hz. La configuration avec haut-parleurs de taille plus importante (courbes en traits fins) induit une fréquence d'extraction des composantes basses fréquences de 350 Hz. Dans le premier cas, les effets de spatialisation peuvent être restitués, sans risque de perte, à partir de 475 HZ. Dans le deuxième cas, les effets de spatialisation peuvent être restitués, sans risque de perte, à partir de 350 HZ. On voit donc l'intérêt d'avoir des haut-parleurs dont les membranes ont une taille relativement importante.

Dans le caisson acoustique 10, le rapport entre le diamètre D de la membrane 23 de chaque premier haut-parleur 21 et la hauteur h du caisson 10 est supérieur à 0,4 (par supérieur, on entend supérieur ou égal).

On note que, si la membrane n'est pas circulaire, on entend par « diamètre » la plus grande dimension de la forme de la membrane vue en coupe selon le plan P perpendiculaire à l'axe central (c'est-à-dire par exemple la longueur du grand axe de l'ellipse ou la longueur du rectangle arrondi).

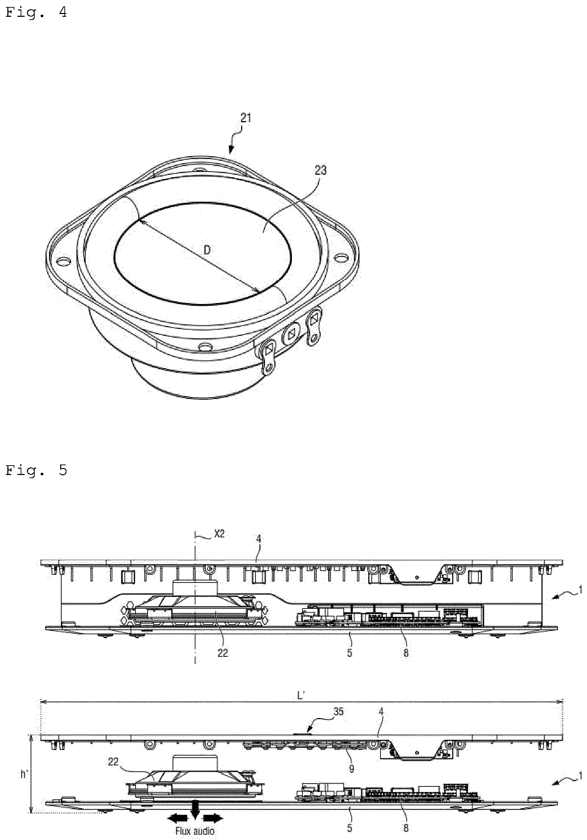

Ici, en référence à la figure 4, le diamètre D de la membrane 23 de chaque premier haut-parleur 21 est compris dans l'intervalle [24 mm ; 30 mm], et est avantageusement égal à 27 mm.

Ce diamètre relativement élevé permet d'augmenter la fréquence d'extraction des composantes basses fréquences. Les paramètres de *Thiele* & *Small* sont un ensemble de paramètres électromécaniques qui définissent les performances d'un haut-parleur en basse fréquence. Parmi ces grandeurs, la fréquence de résonance est la fréquence à laquelle le haut-parleur résonne naturellement lorsqu'il est en circuit ouvert, c'est-à-dire sans être monté dans une enceinte. Le haut-parleur pouvant être considéré comme un système masse-ressort, la fréquence de résonance d'un haut-parleur est déterminée par la masse mobile (généralement un cône ou un dôme) et la rigidité de la suspension qui maintient la masse mobile en place. Selon la formule F = (1/(2. π)).√(k/m), plus la membrane est grande, donc plus la masse mobile « m » est grande, plus la fréquence de résonance sera basse. Cela signifie que le haut-parleur est plus efficace pour reproduire les basses fréquences, car il peut déplacer une plus grande quantité d'air à des fréquences plus basses.

Cependant, il est important de noter que la qualité de la reproduction des basses fréquences ne dépend pas uniquement de la taille du haut-parleur. D'autres facteurs, tels que la conception de l'enceinte, le matériau de la membrane du haut-parleur et la qualité du circuit magnétique peuvent également avoir un impact significatif sur les performances des basses fréquences. Tous ces aspects ont été pris en compte dans la conception du produit considéré dans cette description, notamment l'utilisation de haut-parleurs large bande ayant une fréquence de coupure autour de 250 Hz.

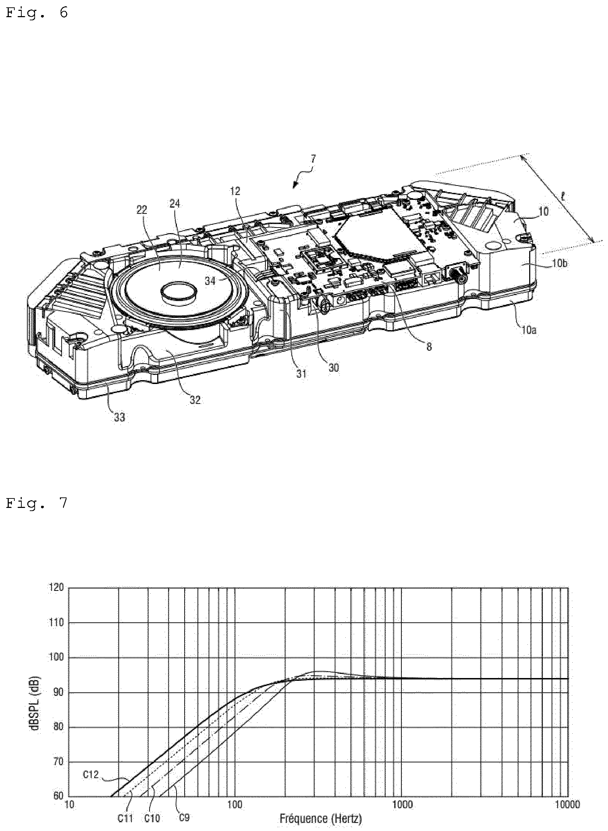

En référence aux figures 5 et 6, le deuxième haut-parleur 22 et la carte électronique principale 8 sont positionnés l'un à côté de l'autre et s'étendant successivement selon une longueur L' du boîtier décodeur 1 qui est perpendiculaire à l'axe avant-arrière Y. Le deuxième haut-parleur 22 est situé à gauche de la carte électronique principale 8.

Le deuxième haut-parleur 22 et la carte électronique principale 8 ne sont donc pas l'un au-dessus de l'autre mais l'un à côté de l'autre, ce qui permet de réduire la hauteur du boîtier décodeur 1.

L'espacement entre les premiers haut-parleurs 21b, 21c rend possible cet agencement.

La carte électronique principale 8 est positionnée dans une cavité d'accueil 30, qui est située dans un renfoncement formé dans la paroi externe de la face inférieure 12 de la pièce inférieure 10b du caisson acoustique 10. La carte électronique principale 8 est fixée à la pièce inférieure 10b du caisson acoustique 10 tout en étant positionnée à l'extérieur de celui-ci.

Une paroi verticale 31 est formée dans la paroi externe de la face inférieure 12 de la pièce inférieure 10b du caisson acoustique 10. Cette paroi 31 s'étend selon la largeur l du caisson acoustique 10 et sépare ainsi physiquement la membrane 24 du deuxième haut-parleur 22 et la carte électronique principale 8. On distingue les câbles 34 qui relient la carte électronique principale 8 aux haut-parleurs en passant au travers de la paroi 31 via une connexion étanche.

La paroi 31 permet d'isoler le deuxième haut-parleur 22 de la cavité d'accueil 30 du caisson acoustique 10 réservée à la carte électronique principale 8. On évite ainsi la formation d'ondes stationnaires, issues du débattement de la membrane 24 du deuxième haut-parleur 22, dans la cavité d'accueil 30.

L'espacement des premiers haut-parleurs 21b, 21c permet, malgré la hauteur réduite du boîtier décodeur 1 et donc du caisson acoustique 10, d'obtenir un volume acoustique très conséquent dédié au deuxième haut-parleur.

Ce volume est ici égal à 1 L.

Une enceinte acoustique est essentiellement un boîtier qui contient un ou plusieurs haut-parleurs. Chaque haut-parleur produit une onde sonore avant qui se propage à l'extérieur de l'enceinte acoustique, et une onde sonore arrière qui reste dans l'enceinte. Ainsi, plus le volume d'air à l'arrière du haut-parleur est important, plus la limitation du débattement de la membrane dudit haut-parleur est faible. Or, comme la restitution des basses fréquences nécessite plus de déplacement d'air que celle des médiums et des aigus, le volume interne de l'enceinte et le niveau de restitution des basses fréquences sont directement corrélés. Un large volume interne d'enceinte permettra de produire des basses fréquences plus puissantes.

On illustre ce qui vient d'être dit en référence à la figure 7.

On a simulé la réponse en fréquence d'un même haut-parleur dans une enceinte de volume interne égal à un quart de litre (courbe C9), un demi-litre (courbe C10), un litre (courbe C11) et deux litres (courbe C12).

On constate donc clairement que la fréquence de coupure dans les basses est inversement proportionnelle au volume de l'enceinte 7.

On voit sur la figure 6 que la pièce inférieure 10b du caisson acoustique 10 comprend une portion latérale inclinée 32, qui s'étend depuis l'ouverture formée dans la face inférieure 12 du caisson acoustique 10, dans laquelle débouche la membrane 24 du deuxième haut-parleur 22. Du fait de cette portion latérale inclinée 32, la largeur de la face inférieure 12 de la pièce inférieure 10b du caisson acoustique 10 est inférieure, au niveau de la portion latérale 32 inclinée, à la largeur du bord supérieur 33 de la pièce inférieure 10b du caisson acoustique 10 qui est opposé à ladite face inférieur 12.

La portion latérale inclinée 32 permet de faciliter un écoulement d'air mis en mouvement par la membrane 24 du deuxième haut-parleur 22. On maximise ainsi la surface ouverte en profitant non seulement de la face inférieure 2 du boîtier décodeur 1, mais également de sa face arrière.

On note que toutes les arêtes extérieures du caisson acoustique 10 sont rayonnées, à nouveau pour faciliter l'écoulement de l'air.

La disposition du deuxième haut-parleur 22 et de la carte électronique principale 8 permet de positionner la carte électronique secondaire 9 de sorte que les microphones 35 sont décalés, selon la longueur du boîtier 1, par rapport au deuxième haut-parleur 22. Les microphones 35 sont situés à l'extérieur d'un volume « virtuel » cylindrique ayant pour axe longitudinal l'axe central X2 de la membrane 24 du deuxième haut-parleur 22, et pour diamètre le diamètre de ladite membrane 24.

Les cellules sensibles des microphones 35 sont en communication acoustique avec l'extérieur du boîtier décodeur 1 via des trous réalisés dans le capot supérieur 4 du boîtier décodeur 1, alors que la membrane 24 du deuxième haut-parleur 22 débouche dans une ouverture formée dans la face inférieure 12 du caisson acoustique 10, et donc au niveau du capot inférieur 5 du boîtier décodeur 1.

La surface comprenant les microphones 35 et le deuxième haut-parleur 22 sont donc complètement décorrélés : les éléments ne sont pas dans le même axe, et la sortie du deuxième haut-parleur 22 se fait sur le plan opposé (surface inferieure du boîtier décodeur 1). De ce fait, la pollution sonore, capturée par les microphones 35 et induite par le deuxième haut-parleur 22, est fortement réduite.

Par ailleurs, la carte électronique principale 8 et le deuxième haut-parleur 22 sont, chacun, très peu impactés par les dégagements thermiques de l'autre. De plus, les deux faces de la carte électronique principale 8 font maintenant face à des surfaces inertes pouvant servir de dissipateur thermique.

Le capot inférieur 5 du boîtier décodeur 1 est ici fabriqué en une matière qui présente une forte conduction thermique. Cette matière est par exemple une matière métallique. Le capot inférieur 5 est ici fabriqué en fonderie aluminium.

Si le capot inférieur 5 était fabriqué en plastique, il serait nécessaire d'ajouter une tôle de dissipation sous la carte électronique principale 8. Ici, cette tôle n'est pas nécessaire : la matière utilisée pour fabriquer le capot inférieur 5 permet donc de réduire la hauteur du boîtier décodeur 1.

De plus, le capot inférieur 5 en aluminium est plus rigide qu'un capot en plastique, ce qui permet de réduire la souplesse globale du produit assemblé et ainsi de limiter les risques de *rub&buzz,* qui sont des bruits de vibrations parasites créés par deux pièces rigides s'entrechoquant lors de la mise en vibration du système par les haut-parleurs.

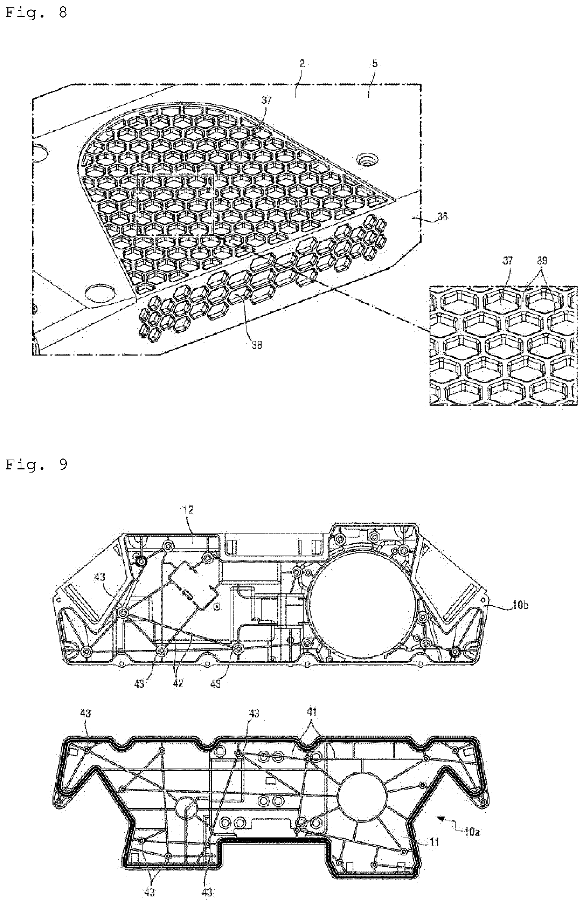

En référence à la figure 8, la face inférieure 2 du capot inférieur 5 du boîtier décodeur 1 est celle du boîtier décodeur 1. Le capot inférieur 5 comprend en outre une face latérale arrière 36. La face inférieure 2 comporte des premiers trous 37 en regard de la membrane 24 du deuxième haut-parleur 22. La face latérale arrière 36 comporte des deuxième trous 38 en regard de la portion latérale inclinée.

Les premiers trous 37 et les deuxièmes trous 38 forment une structure en nid d'abeille.

On permet ainsi une diffusion du son optimale dans les basses fréquences et on évite tout risque de sifflement lié à une surface ouverte trop faible en regard du deuxième haut-parleur 22. La structure en juxtaposition de trous hexagonaux permet de maximiser le taux d'ouverture, par rapport à une répétition de trous ronds ou carrés.

Les premiers trous 37 et les deuxièmes trous 38 sont délimités par des bords 39 (formées sur la surface du capot inférieur 5). Chaque bord 39 est biseauté. L'ajout de ces biseaux permet de favoriser les écoulements d'air.

Comme on l'a vu, presque toute l'électronique du boîtier décodeur 1 se trouve sur une seule carte électronique (la carte électronique principale 8), qui est située en dehors du caisson acoustique 10. Le caisson acoustique 10 est donc simple à assembler et facile à tester unitairement.

On évite de plus d'avoir des interconnexions statiques entre plusieurs cartes, qui sont coûteuses et génératrices de perturbations électromagnétiques. Les connexions statiques inter-modules constituent par ailleurs un point sensible de fiabilité mécanique en cas de chute du produit. Cette problématique ne se retrouve pas dans le boîtier décodeur 1.

Le boîter décodeur 1 comprend en outre des condensateurs (non représentés), qui sont des condensateurs électrolytiques qui présentent un volume important.

Ces condensateurs électrolytiques sont reliés au module audio de la carte électronique principale 8 et contribuent à la fonction d'alimentation des composants électriques audio du boîtier décodeur 1.

Ces condensateurs ont été déportés à l'intérieur du caisson acoustique 10 afin d'optimiser le volume acoustique disponible pour deuxième haut-parleur 22.

En effet, si ces condensateurs avaient été montés sur la carte électronique principale 8, il aurait fallu décaisser le caisson acoustique 10 en face de ces composants pour éviter l'interférence. On aurait donc perdu davantage de volume car la paroi plastique se serait ajoutée au volume des composants eux-mêmes. Le volume interne élevé du caisson acoustique, permettant d'y positionner les condensateurs, présente aussi l'avantage d'avoir une réserve d'énergie locale, réduisant la complexité du bloc d'alimentation extérieur, et réduisant les gros appels de courant distants, se traduisant en une réduction d'émissions électromagnétiques.

En référence à la figure 9, la paroi interne de la face supérieure 11 de la pièce supérieure 10a du caisson acoustique 10 est munie d'un réseau de premières nervures 41. De même, la paroi interne de la face inférieure 12 de la pièce inférieure 10b du caisson acoustique 10 est munie d'un réseau de deuxièmes nervures 42.

Les nervures 41, 42 s'étendent verticalement depuis les parois internes, et relient les points de fixation 43 de ces deux pièces 10a, 10b.

Les nervures 41, 42 permettent de limiter les déformations du caisson liées aux variations de pression interne créées par le déplacement des membranes des haut-parleurs et par les vibrations générées par ces derniers.

Les premières nervures 41 forment un premier motif. Les deuxièmes nervures 42 forment un deuxième motif, qui est différent du premier motif. Ceci permet d'éviter la formation de cloisons, à l'intérieur du caisson 10, qui gêneraient les écoulements d'air.

La hauteur des nervures est un paramètre très important pour empêcher la flexion des pièces, car elle compte à la puissance 3.

La hauteur des nervures 41, 42 a donc été maximisée dans les deux pièces.

Les nervures 41, 42 sont cependant conçues de manière à conserver une certaine distance minimale entre le sommet des premières nervures 41 de la pièce supérieure 10a et le sommet des nervures 42 de la pièce inférieure 10b du caisson acoustique 10 lorsque celui-ci est assemblé.

Cette distance minimale est ici comprise entre 3 mm et 5 mm, et est par exemple égale à 4 mm.

Cet espace permet d'éviter les effets de sifflement qui auraient été créés par les déplacements d'air à travers les fentes fines ainsi créées.

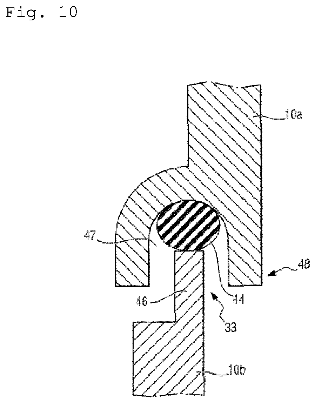

En référence à la figure 10, le caisson acoustique 10 comprend un joint d'étanchéité 44 entre les deux pièces 10a, 10b. Le joint d'étanchéité 44 est positionné sur le pourtour interne du caisson 10 (entre le deux pièces 10a, 10b) permet de conserver un volume acoustique clos.

Compte tenu de la grande dimension des pièces constituant le caisson acoustique 10, les tolérances de fabrication par le procédé d'injection plastique sont grandes, de l'ordre de +/- 1 mm.

On utilise un joint 44 en élastomère de section circulaire. Cette solution est facilement industrialisable et sans perte de matière lors de la fabrication (contrairement par exemple à un joint en mousse plat, dont la découpe génère beaucoup de perte de matière).

L'un des bord inférieur 48 de la pièce supérieure 10a ou bord supérieur 33 de la pièce inférieure 10b comprend une nervure 46 s'étendant sur tout le long du pourtour dudit bord, et l'autre des bord inférieur de la pièce supérieure ou bord supérieur de la pièce inférieure comprend une gorge 47 s'étendant sur tout le long du pourtour dudit bord.

Ici, la nervure 46 s'étend sur le bord supérieur 33 de la pièce inférieure 10b et la gorge 47 s'étend sur le bord inférieur 48 de la pièce supérieure 10a.

Il serait possible d'inverser cette configuration : la gorge 47 serait alors formée sur le pourtour de la pièce inférieure 10b, et la nervure 46 sur le pourtour de la pièce supérieure 10a.

La gorge 47, lorsqu'elle est vue en coupe selon un plan perpendiculaire au pourtour, comprend un fond de forme semi-circulaire et deux parois verticales qui s'étendent depuis l'ouverture de la gorge 47 jusqu'au fond.

Le joint 44 est déposé dans la gorge 47. La nervure 46 vient comprimer le joint 44 lors de l'assemblage et de la fixation entre elles de la pièce supérieure 10a et de la pièce inférieure 10b (par vissage via les points de fixation 43 par exemple).

La largeur maximale de la gorge 47, c'est-à-dire la distance entre les parois verticales, est comprises entre 2 et 4 fois la largeur de la nervure 46.

Un jeu important est donc laissé entre la nervure d'écrasement 46 et les parois latérales de la gorge 47 pour absorber les dispersions dimensionnelles.

En revenant à la figure 1, on note que la face avant 3 du caisson acoustique 10 présente un décroché 50 permettant d'accueillir, en plus des LEDs de statut et du récepteur infrarouge, un module caméra.

Le boîtier décodeur 1 comporte en outre un certain nombre d'antennes radiofréquences, reliées à des modules radiofréquences du module de communication de la carte électronique principale 8. Ces antennes comprennent une antenne 52 positionnée sur le capot supérieur 4 du boîtier décodeur 1, et entoure l'interface de contrôle 53 (boutons) du boîtier décodeur 1 et les microphones 35. Ces antennes comprennent aussi des antennes 54, 55 et 56, situées respectivement sur la face avant 14, la face latérale arrière gauche 17, et la face latérale arrière droite 19 du caisson 10. Ces antennes, du fait de la longueur importante du caisson 10 et du boîtier décodeur 1, bénéficient d'une bonne séparation physique même lorsqu'elles se partagent les mêmes fréquences.

Bien entendu, l'invention n'est pas limitée aux modes de réalisation décrits mais englobe toute variante entrant dans le champ de l'invention tel que défini par les revendications.

## Revendications

1. Boîtier décodeur (1), intégrant une enceinte acoustique qui comporte un caisson acoustique (10) dans lequel sont intégrés au moins deux premiers haut-parleurs (21b, 21c) agencés pour restituer des moyennes et des hautes fréquences, et un deuxième haut-parleur (22) agencé pour restituer des basses fréquences, les deux premiers haut-parleurs (21b, 21c) étant positionnés à l'avant et de chaque côté du caisson acoustique, un axe central (X2) d'une membrane (24) du deuxième haut-parleur (22) étant un axe vertical, le boîtier décodeur comportant de plus une carte électronique principale (8) comprenant un module de décodage et un module audio, **caractérisé en ce que**
le deuxième haut-parleur (22) et la carte électronique principale (8) sont positionnés l'un à côté de l'autre et s'étendent successivement selon une longueur (L') du boîtier décodeur (1) qui est perpendiculaire à un axe avant-arrière du caisson acoustique.

2. Boîtier décodeur selon la revendication 1, dans lequel les deux premiers haut-parleurs (21b, 21c) sont orientés chacun vers l'extérieur du caisson acoustique, de sorte que pour chaque premier haut-parleur, un angle (θ) entre un axe central (X1) d'une membrane (23b, 23c) dudit premier haut-parleur et l'axe avant-arrière (Y) du caisson acoustique est compris entre 30° et 50° , un rapport entre une distance (d) entre des centres des membranes des premiers haut-parleurs, et une hauteur (h) du caisson acoustique, étant supérieur à 5, et un rapport entre un diamètre (D) de la membrane de chaque premier haut-parleur et la hauteur du caisson acoustique étant supérieur à 0,4.

3. Boîtier décodeur selon 1a revendication 2, dans lequel :
- pour chaque premier haut-parleur (21b, 21c), l'angle (θ) entre l'axe central (X1) de la membrane dudit premier haut-parleur et l'axe avant-arrière (Y) du caisson acoustique est compris dans l'intervalle [38° ; 42°] ;
- la distance (d) entre les centres des membranes des premiers haut-parleurs est comprise dans l'intervalle [320 mm ; 380 mm] ;
- la hauteur (h) du caisson acoustique (10) est comprise dans l'intervalle [50 mm ; 60 mm] ;
- le diamètre (D) de la membrane de chaque premier haut-parleur est compris dans l'intervalle [24 mm ; 30 mm].

4. Boîtier décodeur selon l'une des revendications précédentes, le caisson acoustique (10) comprenant une pièce supérieure (10a) et une pièce inférieure (10b) définies selon la hauteur (h) du caisson acoustique.

5. Boîtier décodeur selon la revendication 4, la membrane (24) du deuxième haut-parleur (22) étant fixée à une face inférieure (12) de la pièce inférieure (10b) du caisson acoustique et débouchant dans une ouverture formée dans ladite face inférieure.

6. Boîtier décodeur selon la revendication 5, dans lequel la pièce inférieure (10b) du caisson acoustique (10) comprend une portion latérale inclinée (32), qui s'étend depuis ladite ouverture, de sorte qu'une largeur de la face inférieure (12) de la pièce inférieure du caisson acoustique est inférieure, au niveau de la portion latérale inclinée, à une largeur d'un bord supérieur (33) de la pièce inférieure (10b) qui est opposé à ladite face inférieure, la portion latérale inclinée permettant de faciliter un écoulement d'air mis en mouvement par la membrane (24) du deuxième haut-parleur (22).

7. Boîtier décodeur selon l'une des revendications 4 à 6, dans lequel une paroi interne d'une face supérieure (11) de la pièce supérieure (10a) comprend des premières nervures (41) formant un premier motif, et dans laquelle une paroi interne de la face inférieure (12) de la pièce inférieure (10b) comprend des deuxièmes nervures (42) formant un deuxième motif, qui est différent du premier motif.

8. Boîtier décodeur selon la revendication 7, dans lequel, lorsque le caisson acoustique est assemblé, une distance minimale entre un sommet des premières nervures (41) et un sommet des deuxièmes nervures (42) est comprise entre 3 mm et 5 mm.

9. Boîtier décodeur selon l'une des revendications 4 à 8, dans lequel l'un des bord inférieur (48) de la pièce supérieure (10a) ou bord supérieur (33) de la pièce inférieure (10b) comprend une nervure (46) s'étendant sur un pourtour dudit bord, et l'autre des bord inférieur de la pièce supérieure ou bord supérieur de la pièce inférieure comprend une gorge (47) s'étendant sur un pourtour dudit bord, un joint d'étanchéité (44) étant positionné dans la gorge et étant comprimé par la nervure (46) lorsque le caisson acoustique est assemblé.

10. Boîtier décodeur selon l'une des revendications précédentes, dans lequel la carte électronique principale (8) est positionnée, à l'extérieur du caisson acoustique (10), dans une cavité d'accueil (30) définie dans un renfoncement formé dans une paroi externe d'une face inférieure (12) de la pièce inférieure (10b) du caisson acoustique.

11. Boîtier décodeur selon la revendication 6, comprenant en outre un capot inférieur (5) qui comprend une face inférieure (12) et une face latérale arrière (36), la face inférieure comportant des premiers trous (37) en regard de la membrane (24) du deuxième haut-parleur (22), la face latérale arrière (36) comportant des deuxième trous (38) en regard de la portion latérale inclinée (32).

12. Boîtier décodeur selon la revendication 11, dans lequel les premiers trous et les deuxièmes trous forment une structure en nid d'abeille.

13. Boîtier décodeur selon l'une des revendications 4 à 12, comprenant une paroi verticale (31), qui est formée dans une paroi externe de la face inférieure (12) de la pièce inférieure (10b) du caisson acoustique (10), qui s'étend selon une largeur de la pièce inférieure, et qui sépare ainsi physiquement la membrane du deuxième haut-parleur (22) de la carte électronique principale (8).

## Patentansprüche

1. Decoderbox (1) mit einer eingebauten Lautsprecherbox, die ein Akustikgehäuse (10) enthält, in welchem zumindest zwei erste Lautsprecher (21b, 21c) zur Wiedergabe von Mittel- und Hochfrequenzen und ein zweiter Lautsprecher (22) zur Wiedergabe von Tieffrequenzen eingebaut sind, wobei die zwei ersten Lautsprecher (21b, 21c) stirnseitig auf beiden Seiten des Akustikgehäuses positioniert sind, wobei eine Mittelachse (X2) einer Membran (24) des zweiten Lautsprechers (22) eine senkrechte Achse ist, wobei die Decoderbox ferner eine Haupt-Elektronikkarte (8) mit einem Decodiermodul und einem Audiomodul enthält, **dadurch gekennzeichnet, dass** der zweite Lautsprecher (22) und die Haupt-Elektronikkarte (8) nebeneinander positioniert sind und sich aufeinanderfolgend entlang einer Länge (L') der Decoderbox (1) erstrecken, die senkrecht zu einer vorne/hinten-Achse des Akustikgehäuses verläuft.

2. Decoderbox nach Anspruch 1, wobei die zwei ersten Lautsprecher (21b, 21c) jeweils von dem Akustikgehäuse weg nach außen ausgerichtet sind, sodass für jeden ersten Lautsprecher ein Winkel (θ) zwischen einer Mittelachse (X1) einer Membran (23b, 23c) des betreffenden ersten Lautsprechers und der vorne/hinten-Achse (Y) des Akustikgehäuses zwischen 30° und 50° beträgt, wobei ein Verhältnis zwischen einem Abstand (d) zwischen Mittelpunkten der Membranen der ersten Lautsprecher und einer Höhe (h) des Akustikgehäuses größer als 5 ist, und wobei ein Verhältnis zwischen einem Durchmesser (D) der Membran jedes ersten Lautsprechers und der Höhe des Akustikgehäuses größer als 0,4 ist.

3. Decoderbox nach Anspruch 2, wobei:
- für jeden ersten Lautsprecher (21b, 21c) der Winkel (θ) zwischen der Mittelachse (X1) der Membran des ersten Lautsprechers und der vorne/hinten-Achse (Y) des Akustikgehäuses in dem Intervallbereich [38° ; 42°] liegt;
- der Abstand (d) zwischen den Mittelpunkten der Membranen der ersten Lautsprecher in dem Intervallbereich [320 mm ; 380 mm] liegt;
- die Höhe (h) des Akustikgehäuses (10) in dem Intervallbereich [50 mm ; 60 mm] liegt;
- der Durchmesser (D) der Membran jedes ersten Lautsprechers in dem Intervallbereich [24 mm ; 30 mm] liegt.

4. Decoderbox nach einem der vorhergehenden Ansprüche, wobei das Akustikgehäuse (10) ein Oberteil (10a) und ein Unterteil (10b) umfasst, die gemäß der Höhe (h) des Akustikgehäuses definiert sind.

5. Decoderbox nach Anspruch 4, wobei die Membran (24) des zweiten Lautsprechers (22) an einer Unterseite (12) des Akustikgehäuse-Unterteils (10b) befestigt ist und in eine in der Unterseite ausgebildete Öffnung mündet.

6. Decoderbox nach Anspruch 5, wobei das Unterteil des Akustikgehäuses (10) einen schrägen Seitenabschnitt (32) aufweist, der sich von der Öffnung weg erstreckt, sodass eine Breite der Unterseite (12) des Akustikgehäuse-Unterteils im Bereich des schrägen Seitenabschnitts kleiner ist als eine Breite eines der Unterseite entgegengesetzten, oberen Randes (33) des Unterteils (10b), wobei der schräge Seitenabschnitt ein leichteres Ausströmen von durch die Membran (24) des zweiten Lautsprechers (22) in Bewegung gesetzter Luft erlaubt.

7. Decoderbox nach einem der Ansprüche 4 bis 6, wobei eine Innenwand einer Oberseite (11) des Oberteils (10a) erste Rippen (41) umfasst, die ein erstes Muster bilden, und wobei eine Innenwand der Unterseite (12) des Unterteils (10b) zweite Rippen (42) umfasst, die ein sich von dem ersten Muster unterscheidendes, zweites Muster bilden.

8. Decoderbox nach Anspruch 7, wobei im zusammengebauten Zustand des Akustikgehäuses ein Mindestabstand zwischen einem Scheitelpunkt der ersten Rippen (41) und einem Scheitelpunkt der zweiten Rippen (42) zwischen 3 mm und 5 mm beträgt.

9. Decoderbox nach einem der Ansprüche 4 bis 8, wobei der untere Rand (48) des Oberteils (10a) bzw. der obere Rand (33) des Unterteils (10b) eine am Umfang des betreffenden Randes verlaufende Rippe (46) umfasst, und der jeweils andere Rand, d. h. der obere Rand des Unterteils bzw. der untere Rand des Oberteils, eine am Umfang des betreffenden Randes verlaufende Hohlkehle (47) umfasst, wobei in der Hohlkehle eine Dichtung (44) positioniert ist, die im zusammengebauten Zustand des Akustikgehäuses von der Rippe (46) komprimiert wird.

10. Decoderbox nach einem der vorhergehenden Ansprüche, wobei die Haupt-Elektronikkarte (8) außerhalb des Akustikgehäuses (10) in einem Aufnahmeraum (30) positioniert ist, der in einer Vertiefung definiert ist, die in einer Außenwand einer Unterseite (12) des Akustikgehäuse-Unterteils (10b) ausgebildet ist.

11. Decoderbox nach Anspruch 6, ferner umfassend eine untere Abdeckung (5) mit einer Unterseite (12) und mit einer hinteren Lateralseite (36), wobei die Unterseite erste Löcher (37) enthält, die der Membran (24) des zweiten Lautsprechers (22) gegenüberliegen, wobei die hintere Lateralseite (36) zweite Löcher (38) enthält, die dem schrägen Seitenabschnitt (32) gegenüberliegen.

12. Decoderbox nach Anspruch 11, wobei die ersten Löcher und die zweiten Löcher eine Wabenstruktur bilden.

13. Decoderbox nach einem der Ansprüche 4 bis 12, umfassend eine senkrechte Wand (31), die in einer Außenwand der Unterseite (12) des Unterteils (10b) des Akustikgehäuses (10) gebildet ist, welche sich entlang einer Breite des Unterteils erstreckt und die dadurch die Membran des zweiten Lautsprechers (22) physisch von der Haupt-Elektronikkarte (8) trennt.

## Claims

1. Set-top box (1), integrating a speaker which comprises an acoustic box (10), wherein at least two first loudspeakers (21b, 21c) are integrated, arranged to play back medium and high frequencies, and a second loudspeaker (22) arranged to play back low frequencies, the two first loudspeakers (21b, 21c) being positioned at the front and on each side of the acoustic box, a central axis (X2) of a membrane (24) of the second loudspeaker (22) being a vertical axis, the set-top box comprising, in addition, a main electronic board (8) comprising a decoding module and an audio module, **characterized in that** the second loudspeaker (22) and the main electronic board (8) are positioned to the side of one another and extend successively along a length (L') of the set-top box (1), which is perpendicular to a front-to-rear axis of the acoustic box.

2. Set-top box according to claim 1, wherein the two first loudspeakers (21b, 21c) are each oriented towards the outside of the acoustic box, such that, for each first loudspeaker, an angle (θ) between a central axis (X1) of a membrane (23b, 23c) of said first loudspeaker and the front-to-rear axis (Y) of the acoustic box is between 30° and 50°, a ratio between a distance (d) between the centres of the membranes of the first loudspeakers, and a height (h) of the acoustic box, being greater than 5, and a ratio between a diameter (D) of the membrane of each first loudspeaker and the height of the acoustic box being greater than 0.4.

3. Set-top box according to claim 2, wherein:
- for each first loudspeaker (21b, 21c), the angle (θ) between the central axis (X1) of the membrane of said first loudspeaker and the front-to-rear axis (Y) of the acoustic box is in the range [38°; 42°];
- the distance (d) between the centres of the membranes of the first loudspeakers is in the range [320mm; 380mm];
- the height (h) of the acoustic box (10) is in the range [50mm; 60mm];
- the diameter (D) of the membrane of each first loudspeaker is in the range [24mm; 30mm].

4. Set-top box according to one of the preceding claims, the acoustic box (10) comprising an upper part (10a) and a lower part (10b) defined according to the height (h) of the acoustic box.

5. Set-top box according to claim 4, the membrane (24) of the second loudspeaker (22) being fixed to a lower face (12) of the lower part (10b) of the acoustic box and opening into an opening formed in said lower face.

6. Set-top box according to claim 5, wherein the lower part (10b) of the acoustic box (10) comprises an inclined side portion (32), which extends from said opening, such that a width of the lower face (12) of the lower part of the acoustic box is less, at the inclined side portion, than a width of an upper edge (33) of the lower part (10b), which is opposite said lower face, the inclined side portion making it possible to facilitate an airflow moved by the membrane (24) of the second loudspeaker (22).

7. Set-top box according to one of claims 4 to 6, wherein an internal wall of an upper face (11) of the upper part (10a) comprises first ridges (41) forming a first pattern, and wherein an internal wall of the lower face (12) of the lower part (10b) comprises second ridges (42) forming a second pattern, which is different from the first pattern.

8. Set-top box according to claim 7, wherein, when the acoustic box is assembled, a minimum distance between a top of the first ridges (41) and a top of the second ridges (42) is between 3mm and 5mm.

9. Set-top box according to one of claims 4 to 8, wherein one of the lower edges (48) of the upper part (10a) or upper edge (33) of the lower part (10b) comprises a ridge (46) extending over a perimeter of said edge, and the other of the lower edges of the upper part or upper edge of the lower part comprises a recess (47) extending over a perimeter of said edge, a seal (44) being positioned in the recess and being compressed by the ridge (46) when the acoustic box is assembled.

10. Set-top box according to one of the preceding claims, wherein the main electronic board (8) is positioned, outside of the acoustic box (10), in a receiving cavity (30) defined in a reinforcement formed in an external wall of a lower face (12) of the lower part (10b) of the acoustic box.

11. Set-top box according to claim 6, further comprising a lower cap (5) which comprises a lower face (12) and a rear side face (36), the lower face comprising first holes (37) facing the membrane (24) of the second loudspeaker (22), the rear side face (36) comprising second holes (38) facing the inclined side portion (32).

12. Set-top box according to claim 11, wherein the first holes and the second holes form a honeycomb structure.

13. Set-top box according to one of claims 4 to 12, comprising a vertical wall (31), which is formed in an external wall of the lower face (12) of the lower part (10b) of the acoustic box (10), which extends along a width of the lower part, and which thus physically separates the membrane of the second loudspeaker (22) from the main electronic board (8).
